# EUROPEAN PATENT SPECIFICATION

(11) **EP 0 984 249 B1**
(45) Date of publication and mention of the grant of the patent: **23.06.2004**
(21) Application number: 99117066.3
(22) Date of filing: 30.08.1999
(51) Int. Cl.: G01D 11/28

(54) **Back-lightable monoblock pointer unit**
Rückseitig beleuchtbare Monoblock Zeiger-Einheit
Ensemble d'aiguille monobloc à illumination arrière

(30) Priority: 01.09.1998 IT TO980736
(43) Date of publication of application: 08.03.2000
(73) Proprietor: MAGNETI MARELLI SISTEMI ELETTRONICI S.p.A., 20011 Corbetta (Milano) (IT)
(72) Inventor: Fallini, Andrea, 20025 Legnano (IT); Angelini, Marco, 27021 Bereguardo (IT)
(74) Representative: Jorio, Paolo, Dr. Ing.

(56) References cited:
- EP-A- 0 503 400
- EP-A- 0 803 711
- DE-A- 3 201 571
- DE-A- 19 624 081
- US-A- 5 546 888

## Description

The present invention relates to a back-lightable monoblock pointer unit, in particular for motor vehicle dashboards.

It is known that back-lightable pointer units for dashboards which can be fitted in motor vehicles, trucks, and truck-trailer units, are devices which generally comprise an actual pointer, an aesthetic cover button, and, optionally, a counterweight and an anti-halation device.

The pointer usually consists of an indicator hand, which is produced integrally with a hub, which is connected to a control device by means of a rotary pin. This pointer is made of a (substantially transparent) material with low absorbency, such that it can constitute a light guide.

In particular, the hub receives the light which is obtained from a light source (for example a lamp or an LED), which is disposed rearward relative to the hub itself, and permits propagation of the light via the indicator hand, which is thus clearly visible to the driver.

In addition, in order to obtain a better aesthetic effect, one of the surfaces of the indicator hand is decorated by means of processes of hot stamping, pad application, or in-mould decoration.

On the other hand, the aesthetic cover button is made of an opaque material, and is disposed such as to screen the light source, such that the only light which is emitted from the pointer is that which is propagated through the light guide part which constitutes the pointer hand.

However, in some cases, owing to specific unplanned reflections on inner surfaces, interposition of a screening button is not sufficient to prevent part of the light emitted by the source from emerging elsewhere, thus causing annoying and unattractive halation around the base of the button itself.

For this reason, use is often made of an anti-halation device, which usually consists of a ring fitted flush against a surface of the hub, which faces the source of light, and constitutes an independent element of the pointer unit.

This ring is made of a material which can prevent the passage of the light by absorption (high absorbency and low reflectance), rather than by reflection. DE 196 24 081 A discloses a back-lightable pointer wherein a separate mirror is fixed in the interior of the screening button in order to assist the total reflection of light on the prismatic reflection surface of the light guide of said pointer.

Pointer units such as those described are produced from at least two components, which are assembled in a second stage, or are rendered integral by means of stamping processes with three materials (transparent, white, and black).

The object of the present invention is to create a back-lightable pointer unit, which can be obtained in a single piece by means of processes of stamping with two materials, in a simple and economical manner, and which will provide good performance.

According to the present invention, a back-lightable pointer is thus provided, which is produced from a first material with low absorbency, and is substantially transparent, an aesthetic cover button, which is made of a second, opaque material, and is substantially impervious to light, and reflection means, which are produced integrally with the said light guide; the said light guide comprising at least one hub, which can be connected to a moving element of a control device; the said aesthetic cover button being produced integrally with the said hub, and disposed such that it partially covers the said light guide; characterised in that the said light guide and the said button constitute a single piece, which is made of at least two different materials, which have been stamped together or over-stamped, such that the said light guide and the said button are separated from one another by means of interposition of a gap, which can assist the total reflection of light on the said reflection means. In particular, the reflection means consist of a prismatic light reflection surface, which is part of the light guide, and is disposed substantially in the position of the cover button.

This result is obtained by selecting appropriately the two materials, and using stamping processes with two materials, such as to prevent adhesion between the two materials, and to create the gap, by the effect of the incompatibility of the two materials, and of the differentiated shrinkage of the two materials themselves.

By this means, the process of production of the pointer unit is advantageous from an economical point of view, since a smaller number of components and assembly operations is required.

In addition, the use of simpler processes makes it possible to obtain greater uniformity in the characteristics of the final product, with reduction of scrap caused by imperfections, and, in conclusion, with a general improvement in quality.

In order to assist understanding of the present invention, a preferred embodiment is described hereinafter, purely by way of non-limiting example, and with reference to the attached drawings, in which:
figure 1 shows an elevated lateral view of a transverse cross-section of a back-lightable pointer produced according to the dictates of the present invention, in which part of a projection has been omitted for the sake of simplicity;
figure 2 shows a transverse view in cross-section, of a detail of the invention described, which constitutes a light guide together with the reflective prismatic surface, whereas the remaining elements have been omitted for the sake of convenience;
figure 3 shows a detail of figure 1, on an enlarged scale; and
figure 4 shows a table which indicates the level of compatibility of different pairs of materials, for the purposes of production of the present invention.

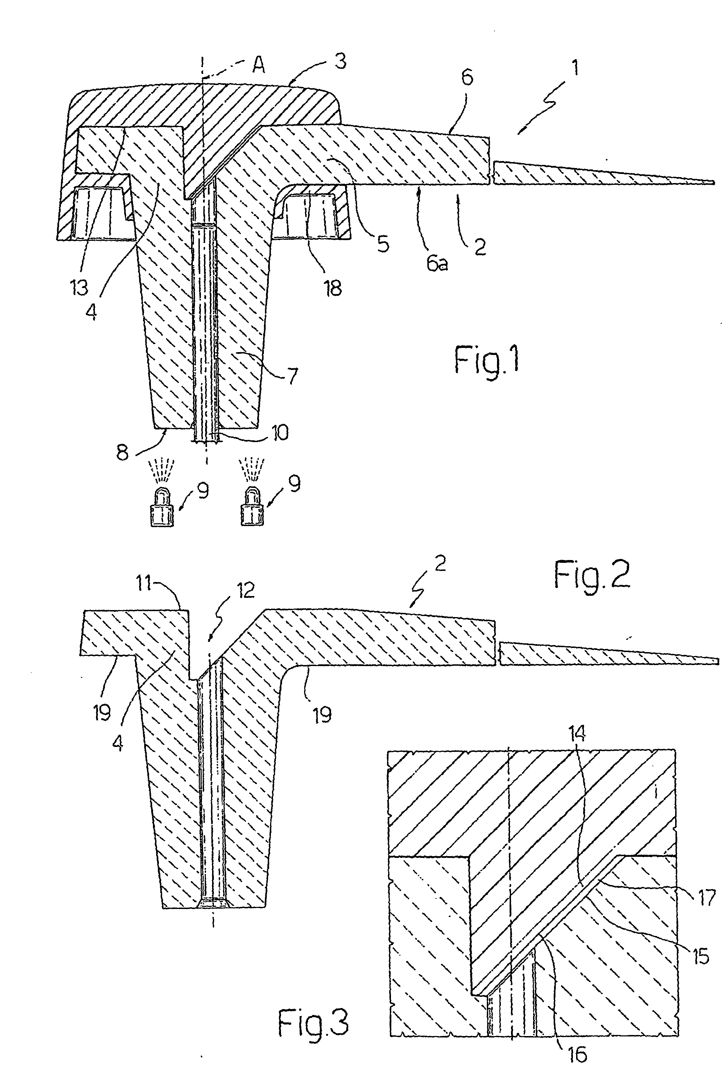

With reference to figures 1, 2 and 3, 1 indicates as a whole a back-lightable pointer unit, comprising a light guide 2 and an aesthetic cover button 3.

The light guide 2 is made of a first material with low absorbency, and is substantially transparent.

The light guide 2 is shaped such that it comprises a hub 4 and two projections which project from the hub 4 itself, as described hereinafter.

A first projection 5, which is integral with the hub 4, extends radially in a projecting manner, in a direction which is substantially at right-angles to an axis of rotation A of the hub itself, such as to constitute a pointer hand 6, which can co-operate with other elements of a pointer device for motor vehicle dashboards, which elements are of a known type, and are not described or illustrated here, for the sake of simplicity.

In order to obtain a better aesthetic effect when lit, a surface 6a of the pointer hand 6 can be decorated by means of processes of hot stamping, pad application, or in-mould decoration.

A second assembly projection 7, which has a frusto-conical shape, and is integral with the hub 4, extends axially in a projecting manner from the hub 4 itself, relative to which it is disposed coaxially.

A base 8 of the projection 7 is disposed such that it faces a light source 9 of a known type (for example a lamp or an LED), such as to receive the light emitted by the light source 9 itself, and to allow the pointer hand 6 to be illuminated via the hub 4.

In addition, the projection 7 is keyed in an angularly integral manner on a control pin 10, coaxially relative to the latter, which is in turn connected to a control device of a type which is known, and is not described here.

In one surface 11 of the hub 4, there is provided a seat 12, which is disposed on the side opposite the projection 7, and is delimited by a prismatic surface 15 which reflects the light; the prismatic surface 15 which reflects the light is integral with the light guide 2, and is disposed obliquely, substantially in the position of the hub 4, at the virtual joining point of the projections 5 and 7.

The cover button 3 is made of a second material, which is opaque and substantially impervious to the light. It is shaped in the form of a cap, and is fitted onto the hub 4, on the side opposite the projection 7, such as to cover part of the hub 4, and to constitute a screen element interposed between an observer and the light source 9, which can illuminate the pointer unit 1.

From an internal surface 13 of the cover button 3, facing the conjugated surface 11 of the hub 4, in which the seat 12 is provided, there extends in a projecting manner, integrally with the cover button 3, a projection 16 which has a substantially prismatic shape, which is delimited by a surface 14, disposed facing parallel to the prismatic reflection surface 15 of the light guide 2.

In order for the reflection of the light on the reflection means constituted by the prismatic surface 15 to be efficient, the two surfaces 14 and 15, which belong respectively to the cover button 3 and to the hub 4 of the light guide 2, must face one another, but must be separated from one another, and divided by a gap 17.

This result is obtained, according to the invention, mainly by appropriate selection of the first and second materials from which the light guide 2, and the cover button 3, respectively, are made.

In fact if these materials have poor chemical affinity with one another, the surfaces which are in contact tend not to adhere, and, during the steps of cooling and shrinkage of the materials themselves, the formation of the gap 17 is assisted.

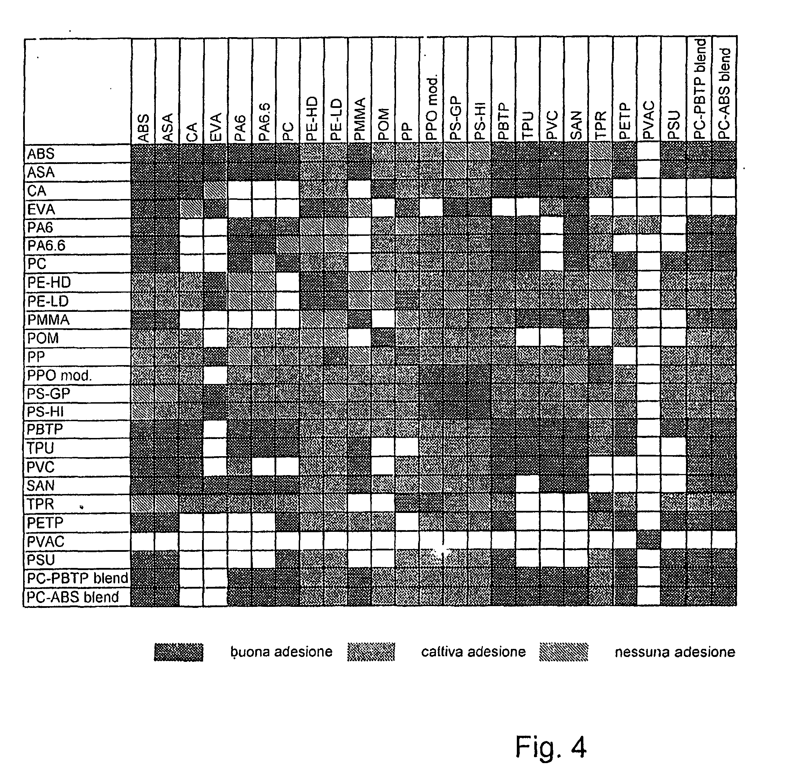

The table which is provided in figure 4 illustrates which pairs of materials can be suitable for the purpose described, on the basis of the chemical and physical properties.

Purely by way of example, it is possible to use polycarbonate or polymethylmethacrylate as materials with low absorbency, for production of the light guide 2, and simultaneously, to use polypropylene or thermoplastic elastomers of a polyolefin type, as opaque materials for production of the cover button 3.

The cover button 3 additionally comprises an integrated anti-halation device 18, which can reduce leakages of light via paths other than those constituted by the pointer hand 6, such as to prevent the formation of annoying and unattractive halations around the base of the cover button 3 itself.

This anti-halation device 18 consists of a ring which is integral with the cover button 3, and faces a portion of a lower surface 19 of the hub 4, such as to surround the projection 7, and optionally, to cover part of its lateral development.

The anti-halation device 18 thus constitutes a single element together with the cover button 3, and it can therefore be produced during the same process step in which the cover button 3 is obtained, and does not require further assembly steps.

It is apparent from the foregoing description that the pointer unit proposed in the present invention can be obtained in a single piece, by means of processes of stamping with two materials.

In fact, in a first step of the process, it is possible to stamp the low-absorbency material, in order to produce the light guide 2, and, if considered appropriate, to carry out in-mould decoration of the surface 6a of the pointer hand 6.

On the other hand, a second step of the production process can consist of production of the cover button 3, and of the anti-halation device 18 which is integrated with it, by means of stamping of the second, opaque material.

Finally, it is apparent that modifications and variants which do not depart from the protective context of the present invention can be made to the pointer unit 1.

In particular, for production of the light guide 2 and the cover button 3, it is possible to select pairs of materials other than those described, provided that, whilst ensuring that the surfaces which face one another do not adhere to one another, the object of not detracting from the reflection properties of the prismatic surface 15 of the light guide 2 is maintained.

Finally, in some cases, it can be appropriate to integrate in the pointer unit 1 a counterweight, which is known and not illustrated, and which balances the component of moment of flexure imposed by the pointer hand 6 on the rotary control pin 10.

## Claims

1. Back-lightable pointer (1), comprising a light guide (2) made of a first material, which has low absorbency and is substantially transparent, an aesthetic cover button (3), which is made of a second, opaque material, and is substantially impervious to light, and reflection means (15), which are produced integrally with the said light guide (2); the said light guide (2) comprising at least one hub (4), which can be connected to a moving element (10) of a control device; the said aesthetic cover button (3) being produced integrally with the said hub (4), and disposed such that ic partially covers the said light guide (2); **characterised in that** the said light guide (2) and the said button (3) constitute a single piece, which is made of at least two different materials, which have been stamped together or over-stamped, such that the said light guide (2) and the said button (3) are separated from one another by means of interposition of a gap (17), which can assist the total reflection of light on the said reflection means.

2. Back-lightable pointer (1) according to claim 1, **characterised in that** the said reflection means (15) comprise a prismatic light reflection surface (15) which is produced integrally on the light guide (2).

3. Back-lightable pointer (1) according to claim 2, **characterised in that** the said gap (17) separates from one another the said prismatic light reflection surface (15) of the said light guide (2), and a corresponding surface (14) of the said button (3), which is disposed parallel to, and facing the latter.

4. Back-lightable pointer (1) according to any one of the preceding claims, **characterised in that** the stamping together or over-stamping is carried out by means of processes using two materials, the materials themselves being selected such that they have low chemical affinity with one another.

5. Back-lightable pointer (1) according to claim 4, **characterised in that** the said first, transparent material is selected from amongst the group consisting of polycarbonate and polymethylmethacrylate, the said second, opaque material being selected from amongst the group consisting of polypropylene and thermoplastic elastomers of a polyolefin type.

6. Back-lightable pointer (1) according to any one of the preceding claims, **characterised in that** it comprises, in an integral manner, an anti-halation device (18) which is made of the said second, opaque material, and is obtained such as to conscituce a single piece with the said light guide (2) and the said aesthetic cover button (3).

7. Back-lightable pointer (1) according to claim 6, **characterised in that** the said hub (4) supports in a projecting manner, in a direction which is at right-angles to its own axis of rotation (A), a first projection (6), which can act as a pointer hand (6), and a second projection (7) which is keyed onto a rotary control pin (10), which extends on the side opposite the said aesthetic cover button (3), coaxially relative to the said hub (4), and the said rotary control pin (10); the said first and second projections (6,7) being produced integrally with the said hub (4).

8. Back-lightable pointer (1) according to claim 7, **characterised in that** the said anti-halation device (18) consists of an anti-halation ring, which is produced integrally with the said aesthetic cover button (3), and is disposed facing at least one portion of a surface (19) of the said hub (4), around the said second projection (7).

## Patentansprüche

1. Hintergrundbeleuchtbarer Anzeiger (1), der einen Lichtleiter (2), der aus einem ersten Material besteht, das ein geringes Absorptionsvermögen hat und im wesentlichen transparent ist, einen formschönen Abdeckungsknopf (3), der aus einem zweiten undurchsichtigen Material besteht, das im wesentlichen lichtundurchlässig ist, sowie Reflexionsmittel (15) umfaßt, die integral mit dem Lichtleiter (2) ausgeführt sind, wobei der Lichtleiter (2) mindestens eine Nabe (4) umfaßt, die mit einem Bewegungselement (10) einer Steuervorrichtung verbunden sein kann, wobei der formschöne Abdeckungsknopf (3) integral mit der Nabe (4) ausgeführt und so vorgesehen ist, daß er den Lichtleiter (2) teilweise abdeckt, **dadurch gekennzeichnet, daß** der Lichtleiter (2) und der Knopf (3) ein einzelnes Stück darstellen, das aus mindestens zwei unterschiedlichen Materialien besteht, die so zusammen- oder übereinandergepreßt werden, daß der Lichtleiter (2) und der Knopf (3) mittels eines dazwischen befindlichen Spalts (17), der die Gesamtlichtreflexion an den Reflexionsmitteln unterstützt, voneinander getrennt sind.

2. Hintergrundbeleuchtbarer Anzeiger (1) nach Anspruch 1, **dadurch gekennzeichnet, daß** die Reflexionsmittel (15) eine prismatische Lichtreflexionsoberfläche (15) umfassen, die integral am Lichtleiter (2) ausgebildet ist.

3. Hintergrundbeleuchtbarer Anzeiger (1) nach Anspruch 2, **dadurch gekennzeichnet, daß** der Spalt (17) die prismatische Lichtreflexionsoberfläche (15) des Lichtleiters (2) und eine entsprechende Oberfläche (14) des Knopfs (3), die parallel zur letzteren und dieser zugewandt vorgesehen ist, voneinander trennt.

4. Hintergrundbeleuchtbarer Anzeiger (1) nach einem der vorstehend aufgeführten Ansprüche, **dadurch gekennzeichnet, daß** das Zusammen- oder Übereinanderpressen mittels Verfahren, bei denen zwei Materialien verwendet werden, durchgeführt wird, wobei die Materialien selbst so ausgewählt sind, daß sie eine geringe chemische Affinität zueinander haben.

5. Hintergrundbeleuchtbarer Anzeiger (1) nach Anspruch 4, **dadurch gekennzeichnet, daß** das erste transparente Material aus der Gruppe ausgewählt ist, die aus Polycarbonat und Polymethylmethacrylat besteht, und das zweite undurchsichtige Material aus der Gruppe ausgewählt ist, die aus Polypropylen und thermoplastischen Elastomeren eines Polyolefintyps besteht.

6. Hintergrundbeleuchtbarer Anzeiger (1) nach einem der vorstehend aufgeführten Ansprüche, **dadurch gekennzeichnet, daß** er in einer integralen Weise,eine Lichthofschutzvorrichtung (18) umfaßt, die aus dem zweiten undurchsichtigen Material besteht und so ausgeführt ist, daß sie mit dem Lichtleiter (2) und dem formschönen Abdeckungsknopf (3) ein einzelnes Stück darstellt.

7. Hintergrundbeleuchtbarer Anzeiger (1) nach Anspruch 6, **dadurch gekennzeichnet, daß** die Nabe (4), in einer vorspringenden Weise in einer in rechten Winkeln zu ihrer eigenen Drehachse (A) verlaufenden Richtung, einen ersten Vorsprung (6), der als ein Zeiger (6) dienen kann, und einen zweiten Vorsprung (7), der auf einem drehbaren Steuerungsstift (10) verkeilt ist, der sich, auf der dem formschönen Abdeckungsknopf (3) gegenüberliegenden Seite, im Verhältnis zur Nabe (4) und zum drehbaren Steuerungsstift (10) koaxial erstreckt, abstützt, wobei der erste und der zweite Vorsprung (6, 7) integral mit der Nabe (4) ausgeführt sind.

8. Hintergrundbeleuchtbarer Anzeiger (1) nach Anspruch 7, **dadurch gekennzeichnet, daß** die Lichthofschutzvorrichtung (18) aus einem Lichthofschutzring besteht, der integral mit dem formschönen Abdeckungsknopf (3) ausgebildet und so ausgeführt ist, daß er mindestens einem Abschnitt einer Oberfläche (19) der Nabe (4) um den zweiten Vorsprung (7) herum zugewandt ist.

## Revendications

1. Aiguille à illumination arrière (1), comprenant un guide de lumière (2) fait d'une première matière, qui présente une faible absorbance et qui est essentiellement transparente, un bouton de couvercle esthétique (3), qui est fait d'une deuxième matière opaque, et qui est essentiellement étanche à la lumière, et un moyen de réflexion (15), qui est d'une seule pièce avec ledit guide de lumière (2) ; ledit guide de lumière (2) comprenant au moins un moyeu (4), qui peut être relié à un élément mobile (10) d'un dispositif de commande ; ledit bouton de couvercle esthétique (3) étant produit d'une seule pièce avec ledit moyeu (4), et disposé de sorte qu'il recouvre partiellement ledit guide de lumière (2) ; **caractérisé en ce que** ledit guide de lumière (2) et ledit bouton (3) constituent une seule pièce, qui est fait d'au moins deux matières différentes, qui ont été matricées ensemble ou sur-matricées, de sorte que ledit guide de lumière (2) et ledit bouton (3) sont séparés l'un de l'autre au moyen de l'interposition d'un espace (17), ce qui peut faciliter la réflexion totale de la lumière sur ledit moyen de réflexion.

2. Aiguille à illumination arrière (1) selon la revendication 1, **caractérisée en ce que** ledit moyen de réflexion (15) comprend une surface de réflexion de lumière prismatique (15) qui est produite d'une seule pièce sur le guide de lumière (2).

3. Aiguille à illumination arrière (1) selon la revendication 2, **caractérisée en ce que** ledit espace (17) sépare, l'une de l'autre, ladite surface de réflexion de lumière prismatique (15) dudit guide de lumière (2), et une surface correspondante (14) dudit bouton (13), qui est disposée parallèlement à cette dernière, et tournée vers elle.

4. Aiguille à illumination arrière (1) selon l'une quelconque des revendications précédentes, **caractérisée en ce que** le matriçage conjoint ou le sur-matriçage est réalisé au moyen de procédés utilisant deux matières, les matières elles-mêmes étant choisies de sorte qu'elles présentent une faible affinité chimique l'une avec l'autre.

5. Aiguille à illumination arrière (1) selon la revendication 4, **caractérisée en ce que** ladite première matière transparente est choisie dans le groupe formé du polycarbonate et du méthacrylate de polyméthyle, ladite deuxième matière opaque étant choisie dans le groupe formé du polypropylène et d'élastomères thermoplastiques d'un type de polyoléfine.

6. Aiguille à illumination arrière (1) selon l'une quelconque des revendications précédentes, **caractérisée en ce qu'**elle comprend, de manière intégrale, un dispositif antihalo (18) qui est faite de ladite deuxième matière opaque, et est obtenu de manière à constituer une seule pièce avec ledit guide de lumière (2) et ledit bouton de couvercle esthétique (3).

7. Aiguille à illumination arrière (1) selon la revendication 6, **caractérisée en ce que** ledit moyeu (4) supporte, de manière à se projeter, dans une direction qui est à angle droit par rapport à son propre axe de rotation (A), une première projection (6) qui peut agir en tant que main d'aiguille (6), et une deuxième projection (7) qui est clavetée sur une broche de commande rotative (10), qui s'étend sur le côté opposé audit bouton de couvercle esthétique (3), coaxialement par rapport audit moyeu (4) et à ladite broche de commande rotative (10) ; lesdites première et deuxième projections (6, 7) étant produites d'une seule pièce avec ledit moyeu (4).

8. Aiguille à illumination arrière (1) selon la revendication 7, **caractérisée en ce que** ledit dispositif antihalo (18) se compose d'un anneau antihalo, qui est produit d'une seule pièce avec ledit bouton de couvercle esthétique (3), et est dirigé au moins vers une partie d'une surface (19) dudit moyeu (4), autour de ladite deuxième projection (7).
